(19) Europäisches Patentamt
European Patent Office
Office européen des brevets

(11) **EP 2 071 389 A1**

(12) **EUROPEAN PATENT APPLICATION**
published in accordance with Art. 153(4) EPC

(43) Date of publication:
**17.06.2009 Bulletin 2009/25**

(51) Int Cl.:
**G02F 1/125** (2006.01)

(21) Application number: **07806924.2**

(22) Date of filing: **07.09.2007**

(86) International application number:
**PCT/JP2007/067483**

(87) International publication number:
**WO 2008/041448 (10.04.2008 Gazette 2008/15)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **04.10.2006 JP 2006272629**

(71) Applicant: **Murata Manufacturing Co. Ltd.
Nagaokakyo-shi, Kyoto 617-8555 (JP)**

(72) Inventor: **YAMADA, Kiyokazu,
c/o Murata Manufacturing Co., Ltd., (A170)
Kyoto 617-8555 (JP)**

(74) Representative: **Thévenet, Jean-Bruno et al
Cabinet Beau de Loménie
158, rue de l'Université
75340 Paris Cédex 07 (FR)**

(54) **ACOUSTOOPTICAL FILTER**

(57)　Optical waveguides (11, 12) are formed on a substrate (10), a thin film (13) whose refractive index is optically lower than the refractive indices of the optical waveguides (11, 12) is formed on the surface of the substrate, and a surface-acoustic-wave waveguide (16) is formed on this thin film (13) so as to cross the optical waveguides (11, 12) in a direction oblique thereto. The optical waveguides (11, 12) are not directly influenced by the position of the SAW waveguide (16) and the phase matching condition regarding the optical waveguides is not changed, whereby the sidelobe characteristic of an optical filter is not degraded because of assigning of weights to the SAW intensity.

FIG.4

**Description**

Technical Field

The present invention relates to an acousto-optic filter that utilizes an acousto-optic effect.

Background Art

In recent years, data traffic has been rapidly increasing because of the explosive proliferation of the Internet and an additional demand for greatly increasing the capacity for data traffic between in-house LANs. Because of this, optical communication that enables large-capacity communication is becoming widely used from backbone systems to access systems. An increase in optical transmission speed or multiplexing of optical wavelengths can increase the capacity of optical communication. One of the important component parts for realizing multiplexing of optical wavelengths is an optical wavelength filter. This is a filter for filtering light of a predetermined wavelength, and is a key device for performing optical wavelength multiplex communication. In a case in which optical wavelengths are highly densely multiplexed, when a predetermined wavelength is filtered, it is necessary to block adjacent channels. In order to do so, a necessary filter characteristic of an optical wavelength filter needs to be low sidelobes with which adjacent channels can be blocked more than a certain degree.

Acousto-optic filters configured to suppress the above-described sidelobes are described in Patent Documents 1 and 2.

Fig. 1 is a plan view showing the structure of an acousto-optic filter described in Patent Document 1. In this acousto-optic filter, optical waveguides 111 and 112 that extend in the y-axis direction on an x-cut LiNbO$_3$ substrate 110 are formed. On these optical waveguides 111 and 112, a SAW waveguide 118 constituted by an optically transparent thin film whose refractive index is lower than that of the substrate 110 is formed in such a manner that the SAW waveguide 118 obliquely crosses the optical waveguides 111 and 112.

At one end portion of the SAW waveguide 118, a transducer 115 including comb-shaped electrodes that generate a surface acoustic wave is formed. Moreover, a SAW absorber 119 composed of a resist is formed at a position so as to sandwich the transducer 115 with the one end portion of the SAW waveguide 118. Moreover, a SAW absorber 120 composed of a resist is formed at the other end portion (a terminal) of the SAW waveguide 118.

In this way, by arranging a SAW waveguide so as to obliquely cross the optical waveguides 111 and 112, Gaussian distribution-like weights are assigned in the longitudinal direction of the optical waveguides in TE-TM mode conversion regarding light that propagates in the optical waveguides 111 and 112, and thus the sidelobes of the filter characteristics are reduced.

On one hand, Fig. 2 is a plan view showing the structure of an acousto-optic filter described in Patent Document 2. In this acousto-optic filter, a transducer 212 for exciting a surface acoustic wave is formed on an x-cut LiNbO$_3$ substrate 210. On the substrate 210, a SAW waveguide 216 which is an area sandwiched by two parallel SAW waveguide wall units 214a and 214b is formed, and an optical waveguide 218 is provided along the SAW waveguide 216. SAW absorbers 220a and 220b are each formed at a corresponding one of the end portions of the SAW waveguide.

Moreover, this acousto-optic filter includes an incident light polarizer 222, which is coupled to the optical waveguide 218 and which treats only polarized waves in a specific direction (TE waves) as signal light. Regarding the TE waves isolated by the polarizer 222, only signal light having a specific wavelength according to the wavelength of the SAW is converted into TM waves. As a result, signal light that has been converted into the TM waves whose polarizing direction is orthogonal to the polarizing direction of the TE waves is isolated from outgoing light by an outgoing light polarizer 224.

In this way, since the two parallel SAW waveguide wall units 214a and 214b that sandwich the optical waveguide 218, which is straight, are provided in a direction oblique to the direction in which the optical waveguide 218 extends, TE-TM mode conversion can be performed without significantly changing coupling coefficients along the optical waveguide.

Patent Document 1: Japanese Unexamined Patent Application Publication No. 11-64809
Patent Document 2: Japanese Unexamined Patent Application Publication No. 8-114776.

Disclosure of Invention

Problems to be Solved by the Invention

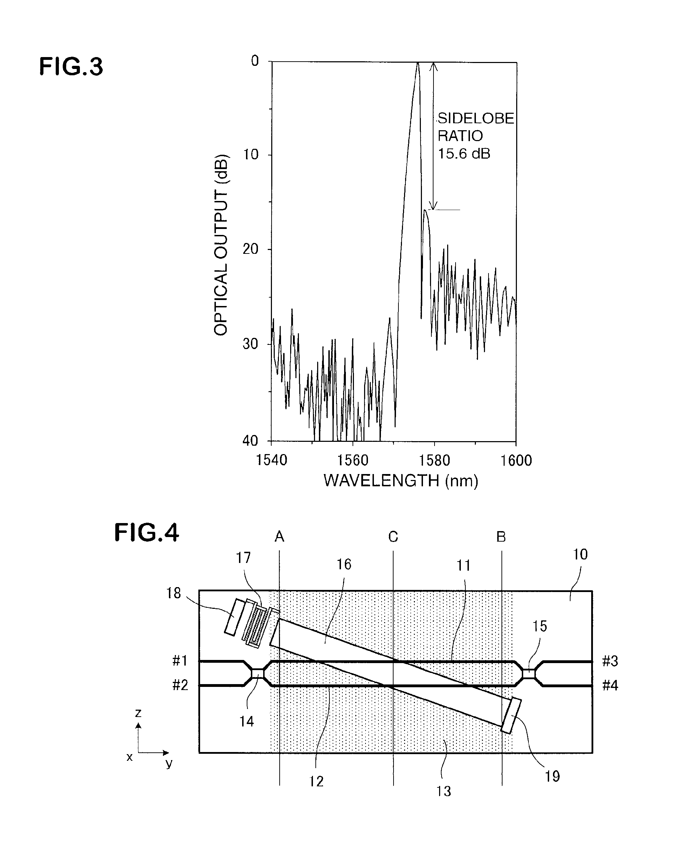

In the acousto-optic filter described in Patent Document 1, the sidelobes of the filter characteristics can be reduced by assigning Gaussian distribution-like weights in the longitudinal direction of the optical waveguide in TE-TM mode conversion. However, when an apparatus was actually made and the characteristics thereof were measured, it was found out that a value that represents a reducing-sidelobe effect was considerably smaller than the theoretical value. Fig. 3 shows the characteristics. In this example, light of a wavelength of 1575 nm passes through and light of other wavelengths is blocked. The theoretical value of the maximum sidelobe ratio is -40 dB; however, the maximum sidelobe ratio is practically about -15.6 dB. Even in a case like this, there is a larger suppressing-sidelobe effect than in the conventional case where the maximum sidelobe ratio is 90 dB and in which assigning of weights to the SAW intensity is not performed. However, the need for further suppressing the above-described sidelobes arises in order to improve the degree of optical wavelength multiplexing.

An object of this invention is to provide an acousto-optic filter that further reduces the sidelobes of the filter characteristics.

Means for Solving the Problems

The inventor of this invention found a problem in that an expected reducing-sidelobe effect could not be obtained, and developed a structure that does not result in such a problem. That is, an acousto-optic filter according to this invention is an acousto-optic filter that is designed not to be influenced by a SAW waveguide with the presumption that the optical waveguide changes its optical propagation constant because of the influence caused by the SAW waveguide.

This invention includes an optical waveguide and a surface-acoustic-wave waveguide that cross on a substrate, and the optical waveguide and the surface-acoustic-wave waveguide are apart at a starting portion and an ending portion of an operation area of the surface-acoustic-wave waveguide and a portion above the optical waveguide has a structure that is optically constant at least within the operation area.

For example, a thin film whose refractive index is lower than that of the optical waveguide is formed above an optical transmission line, and the optically constant structure is realized.

Moreover, the surface-acoustic-wave waveguide is a surface-acoustic-wave waveguide of a thin film that is formed on the thin film.

The surface-acoustic-wave waveguide is, for example, provided in an area sandwiched between surface-acoustic-wave barrier units of two thin films by forming the surface-acoustic-wave barrier units of the two thin films on the thin film.

Advantages

In a case in which a surface-acoustic-wave waveguide is directly arranged on an optical waveguide within an operation area, the propagation constant of the optical waveguide changes; however, according to this invention, a portion above an optical waveguide is optically constant regardless of the arrangement (positional relationship) of a surface-acoustic-wave waveguide within an operation area of the surface-acoustic-wave waveguide. Thus, the optical propagation constant does not change on the optical waveguide, and the phase matching condition does not change. As a result, a larger reducing-sidelobe effect is obtained by weights being assigned to the SAW intensity, whereby an acousto-optic filter with low sidelobes can be obtained.

Moreover, a portion above an optical waveguide is optically constant by forming a thin film whose refractive index is lower than that of the optical waveguide, regardless of the arrangement (positional relationship) of a surface-acoustic-wave waveguide, whereby the structure can be simplified and is easily manufactured.

Moreover, if a surface-acoustic-wave waveguide of a thin film is formed on the thin film, the structure is simplified and is easily manufactured.

Moreover, if an area sandwiched between surface-acoustic-wave barrier units of the two thin films is configured as a surface-acoustic-wave waveguide by forming the surface-acoustic-wave barrier units of the two thin films on the thin film, the structure is simplified and is easily manufactured.

Brief Description of Drawings

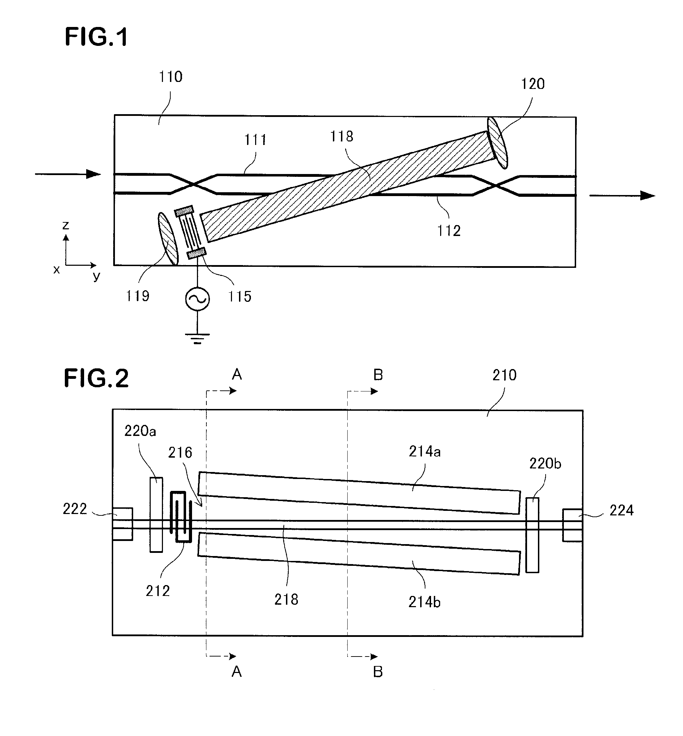

[Fig. 1] Fig. 1 is a plan view of an acousto-optic filter described in Patent Document 1.

[Fig. 2] Fig. 2 is a plan view of an acousto-optic filter described in Patent Document 2.

[Fig. 3] Fig. 3 is a diagram showing an example of the sidelobe characteristic of filter characteristics due to a change in a phase matching condition.

[Fig. 4] Fig. 4 is a plan view of an acousto-optic filter according to a first embodiment.

[Fig. 5] Fig. 5 includes sectional views of various parts of the acousto-optic filter.

[Fig. 6] Fig. 6 is a diagram showing an exemplary intensity distribution of a SAW waveguide.

[Fig. 7] Fig. 7 includes diagrams showing exemplary intensity distributions of a SAW waveguide.

[Fig. 8] Fig. 8 is a plan view of an acousto-optic filter according to a second embodiment.

[Fig. 9] Fig. 9 includes sectional views of various parts of the acousto-optic filter.

[Fig. 10] Fig. 10 includes sectional views of various parts of an acousto-optic filter according to a third embodiment.

Reference Numerals

| 11, 12, 21 | optical waveguide |
| 14, 15 | PBS (Polarization Beam Splitter) |
| 16, 36 | SAW waveguide |
| 17, 27 | transducer |
| 18, 19, 28, 29 | SAW absorber |

| 10, 20 | substrate |
| 13, 23, 33 | thin film |
| 24, 25 | SAW waveguide wall unit |

Best Modes for Carrying Out the Invention

«First Embodiment»

An acousto-optic filter according to a first embodiment will be described with reference to Fig. 4 through Fig. 7.

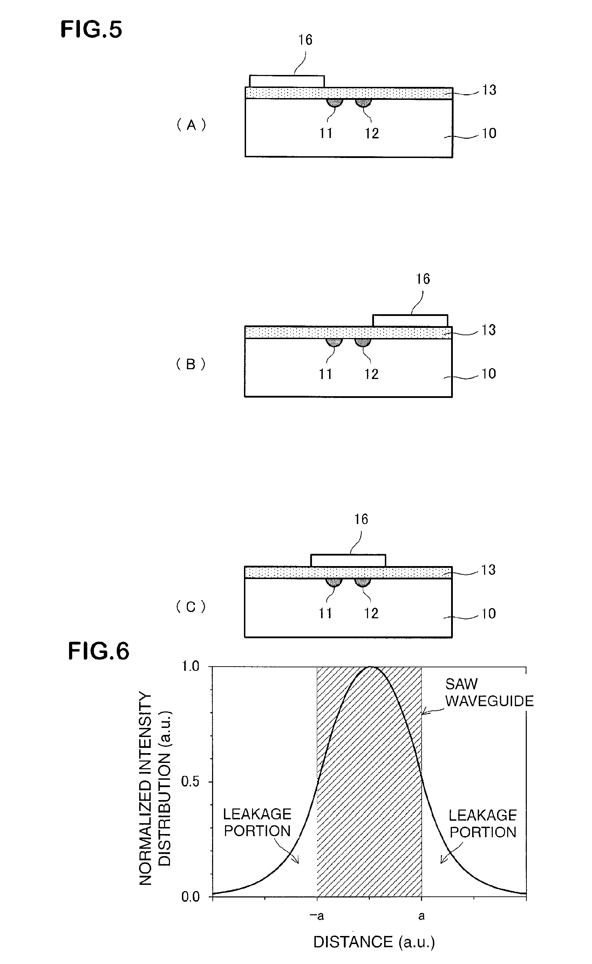

Fig. 4 is a plan view of an acousto-optic filter according to the first embodiment. Fig. 5 includes sectional views at A, B, and C portions in Fig. 4.

In this acousto-optic filter, optical waveguides 11 and 12 that extend in the y-axis direction and PBSs 14 and 15 are formed on a substrate 10. A thin film 13 is formed above the optical waveguides 11 and 12. Moreover, a SAW waveguide 16 is formed on the top surface of the thin film 13 so as to cross the optical waveguides 11 and 12 in a direction oblique thereto.

At one end portion of the SAW waveguide 16, a transducer 17 including comb-shaped electrodes that generate a surface acoustic wave is formed. Moreover, a SAW absorber 18 composed of a resist is formed at a position so as to sandwich the transducer 17 with the one end portion of the SAW waveguide 16. Moreover, a SAW absorber 19 composed of a resist is formed at the other end portion (a terminal) of the SAW waveguide 16.

Specifically, the Ti-diffused optical waveguides 11 and 12 whose depth is 90 nm are formed in the X-cut Y-propagation direction $LiNbO_3$ substrate 10. The optical waveguides 11 and 12 are formed by performing thermal diffusion at 1040°C for eight hours. The transducer 17 has a wavelength $\lambda$ of 20 $\mu$m and an aperture of 60 $\mu$m, and is driven at frequencies from 170 to 180 MHz.

In the drawing, a section from A to B is an operation area, and the length of this operation area is 40 mm along the optical waveguide. Moreover, the crossing angle between the optical waveguides 11 and 12 and the SAW waveguide 16 is 0.29°.

The thin film 13 of ZnO having a thickness of 0.3 $\mu$m is formed on the top surface of the substrate 10 in a range including the operation area. As this thin film 13, a thin film is desirable that does not increase optical propagation loss of the optical waveguides 11 and 12 and whose SAW propagation loss is small. For example, $SiO_2$ or the like is used other than ZnO.

The SAW waveguide 16 of ZnO having a thickness of 0.3 $\mu$m is formed on the top surface of the thin film 13. As the SAW waveguide 16, a SAW waveguide is desirable whose surface-acoustic-wave propagation loss is small. A metal film can be used other than the ZnO film.

In Fig. 4, the PBSs 14 and 15 are polarized-wave separators that cause TE-mode light to pass through in a proceeding direction and TM-mode light to pass through in a direction that crosses the proceeding direction. When light that propagates in the two optical waveguides 11 and 12 is passing through the operation area, a plane of polarization of the light rotates in accordance with the wavelength of a surface acoustic wave that propagates in the SAW waveguide 16. Thus, light that is obtained from light incident from a port #1 in accordance with the wavelength of the surface acoustic wave that propagates in the SAW waveguide emits from a port #4.

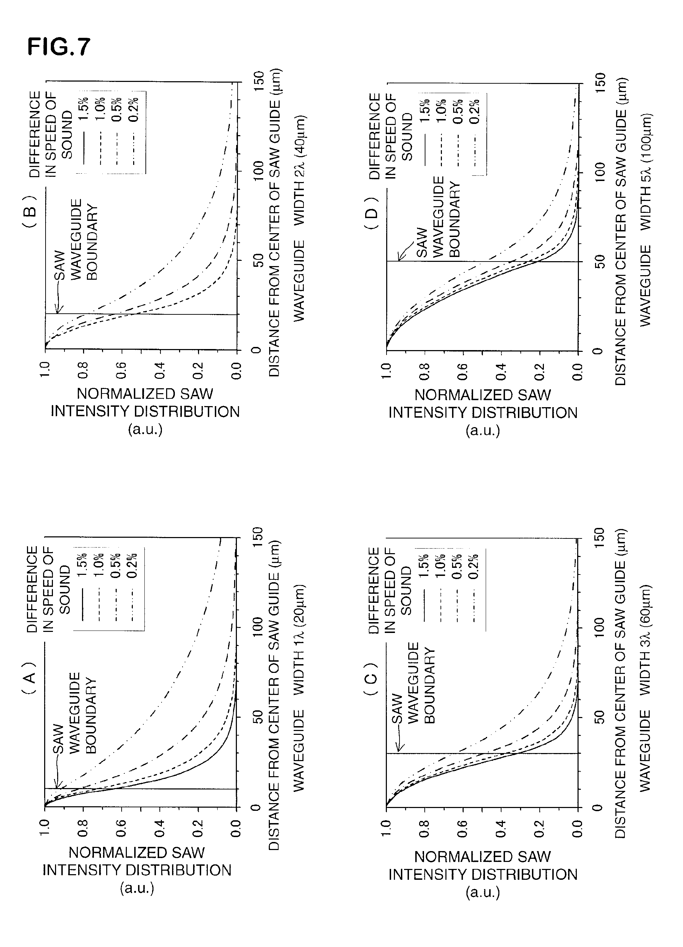

Fig. 6 shows a SAW intensity distribution of the SAW waveguide 16 shown in part C of Fig. 5. Here, the horizontal axis represents the distance from the middle point of the SAW waveguide in the width direction [au] and the vertical axis represents normalized intensity [au]. In this example, an example is shown in which the normalized intensity distribution is 0.5 at the positions where the distances from the middle point of the SAW waveguide are a and -a in the width direction. When a surface acoustic wave actually propagates in the SAW waveguide, the surface acoustic wave propagates not only in the SAW waveguide portion and so-called leakage as shown in Fig. 6 occurs. The amount of this leakage is determined in accordance with a difference in speed of sound regarding a SAW between inside of and outside of the SAW waveguide or the width of the SAW waveguide as shown in Fig. 7. Thus, because of a surface acoustic wave propagating in the SAW waveguide, mode conversion (rotation of a plane of polarization) occurs in light that propagates in the optical waveguide including leakage portions.

Next, a phase matching condition regarding the operation area will be described.
Here, if the wavelength of light is denoted by $\lambda$, propagation constants of the TE and TM modes are denoted by $\beta a$ and $\beta b$, effective refractive indices are denoted by Na and Nb, and the phase speed of a surface acoustic wave is denoted by $\Lambda$, the phase matching condition is expressed by

$$|\beta a - \beta b| = (2\pi/\lambda)|Na - Nb| = 2\pi/\Lambda.$$

The phase constants $\beta a$ and $\beta b$ on the optical waveguide in the operation area shown in Fig. 4 are almost constant by the thin film 13 being formed, and thus the above-described phase matching condition does not change and assigning of weights to the SAW intensity causes a larger reducing-sidelobe effect, whereby an acousto-optic filter with low sidelobes can be obtained.

«Second Embodiment»

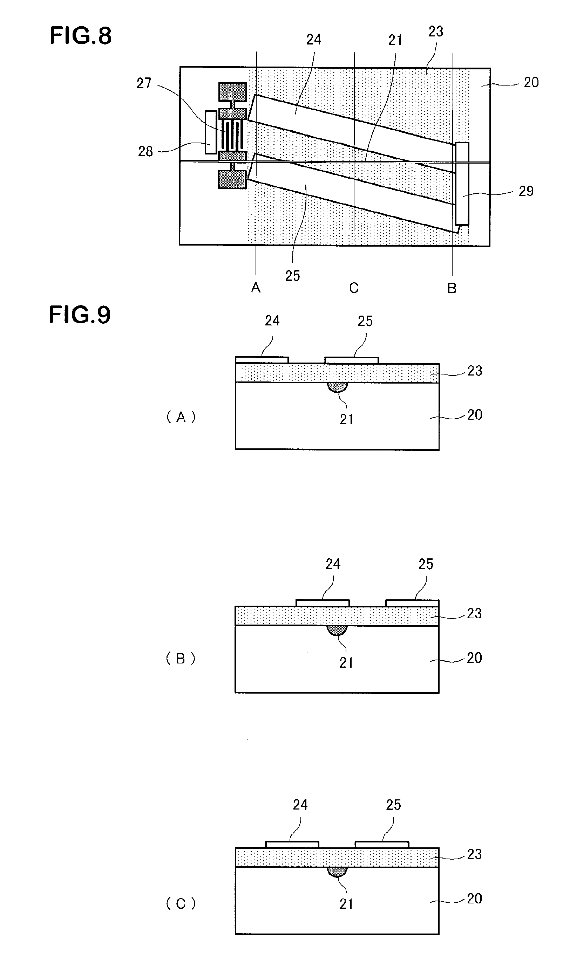

Fig. 8 is a plan view of an acousto-optic filter according to a second embodiment. Fig. 9 includes sectional views at A, B, and C portions in Fig. 8.

In this acousto-optic filter, an optical waveguide 21 that extends in the y-axis direction is formed on a substrate 20. A thin film 23 is formed above the optical waveguide 21. Moreover, SAW waveguide wall units 24 and 25 are formed on the top surface of the thin film 23 so as to cross the optical waveguide 21 in a direction oblique thereto.

At one end portion of the SAW waveguide sandwiched between the SAW waveguide wall units 24 and 25, a transducer 27 including comb-shaped electrodes that generate a surface acoustic wave is formed. Moreover, a SAW absorber 28 composed of a resist is formed at a position so as to sandwich the transducer 27 with the one end portion of the SAW waveguide. Moreover, a SAW absorber 29 composed of a resist is formed at the other end portion (a terminal) of the SAW waveguide.

Specifically, the Ti-diffused optical waveguides 11 and 12 whose depth is 90 nm are formed in the X-cut Y-propagation direction $LiNbO_3$ substrate 10. The optical waveguides 11 and 12 are formed by performing thermal diffusion at 1040°C for eight hours. The transducer 17 has a wavelength $\lambda$ of 20 $\mu$m and an aperture of 60 $\mu$m, and is driven at frequencies from 170 to 180 MHz.

In the drawing, a section from A to B is an operation area, and the length of this operation area is 40 mm along the optical waveguide. Moreover, the crossing angle between the optical waveguide 21 and the SAW waveguide is 0.29°.

The thin film 23 of ZnO having a thickness of 0.3 $\mu$m is formed on the top surface of the substrate 20 in a range including the operation area. As this thin film 23, a thin film is desirable that does not increase optical propagation loss of the optical waveguide 21 and whose SAW propagation loss is small. For example, $SiO_2$ or the like is used other than ZnO.

The SAW waveguide wall units 24 and 25 of SiN having a thickness of 0.3 $\mu$m are formed on the top surface of the thin film 23. The propagation speed of a surface acoustic wave needs to be faster because of formation of the SAW waveguide wall units 24 and 25, and, as the SAW waveguide wall units 24 and 25, SAW waveguide wall units are desirable whose surface-acoustic-wave propagation loss is small. An AlN film can be used other than the SiN film.

In this way, the thin film 23 is formed above the optical waveguide 21 and this gives an optically constant state (a state in which the refractive index is constant). Thus, the phase constant of the optical waveguide becomes constant. Thus, the sidelobes based on the design of the SAW intensity distribution can be obtained.

Here, since the SAW waveguide wall units 24 and 25 are formed on the thin film 23 and only the thin film 23 is formed on the optical waveguide 21 (part C of Fig. 9), the SAW propagation loss can be suppressed, compared with the first embodiment.

«Third Embodiment»

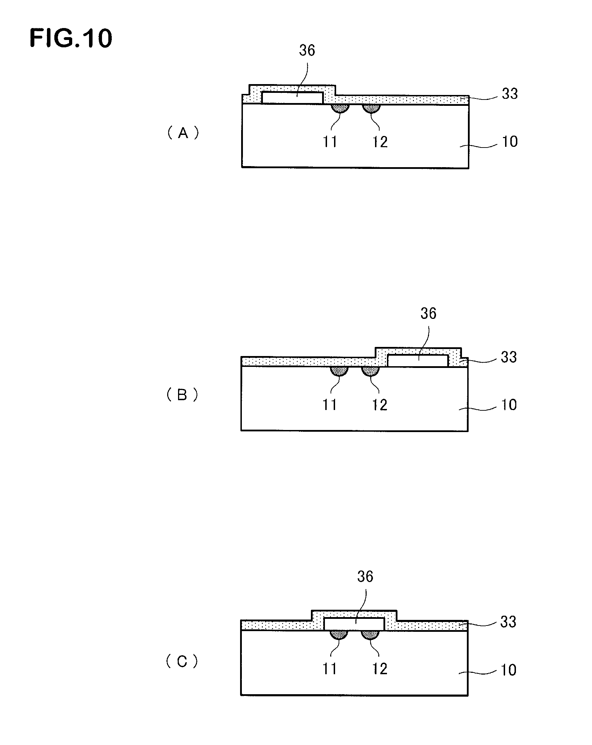

Fig. 10 is a sectional view of an acousto-optic filter according to a third embodiment. The plan view of this acousto-optic filter shows the structure similar to that shown in Fig. 4. Here, a SAW waveguide 36 is directly formed on the substrate 10 and a thin film 33 is formed over the entire top surface (an operation area) of the substrate 10 including this SAW waveguide 36. Here, the thin film 33 is composed of a material whose optical refractive index is almost the same as that of the SAW waveguide 36.

Because of the structure like this, the propagation constant of the optical waveguides 11 and 12 is almost constant in any of sectional areas shown in part A, part B, and part C of Fig. 10, and an acousto-optic filter with low sidelobes can be obtained without changing the phase matching condition and degrading the suppression of the sidelobes due to assigning of weights to the SAW intensity.

## Claims

1. An acousto-optic filter comprising: an optical waveguide and a surface-acoustic-wave waveguide that cross on a substrate, wherein the optical waveguide and the surface-acoustic-wave waveguide are apart at a starting portion and an ending portion of an operation area of the surface-acoustic-wave waveguide and a portion above the optical waveguide has a structure that is optically constant at least within the operation area.

2. The acousto-optic filter according to Claim 1, wherein the structure that is optically constant is a structure in which a thin film whose refractive index is lower than that of the optical waveguide is formed above the optical waveguide.

3. The acousto-optic filter according to Claim 2, wherein the surface-acoustic-wave waveguide is a surface-acoustic-wave waveguide of a thin film that is formed on the thin film.

4. The acousto-optic filter according to Claim 2, wherein the surface-acoustic-wave waveguide is provided in an area sandwiched between surface-acoustic-wave barrier units of two thin films by forming the surface-acoustic-wave barrier units of the two thin films on the thin film.

FIG.1

FIG.2

**FIG.3**

**FIG.4**

## FIG.5

(A)

16
13
11   12
10

(B)

16
13
11   12
10

(C)

16
13
11   12
10

## FIG.6

NORMALIZED INTENSITY DISTRIBUTION (a.u.)

1.0

0.5

0.0

SAW WAVEGUIDE

LEAKAGE PORTION

LEAKAGE PORTION

−a          a

DISTANCE (a.u.)

# FIG.7

**FIG.8**

**FIG.9**

(A)

(B)

(C)

# FIG.10

(A)

(B)

(C)

## INTERNATIONAL SEARCH REPORT

| | International application No. |
|---|---|
| | PCT/JP2007/067483 |

A. CLASSIFICATION OF SUBJECT MATTER
*G02F1/125(2006.01)i*

According to International Patent Classification (IPC) or to both national classification and IPC

B. FIELDS SEARCHED

Minimum documentation searched (classification system followed by classification symbols)
G02F1/125

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 11-64809 A (Fujitsu Ltd.), 05 March, 1999 (05.03.99), Columns 21, 40 to 41; Figs. 7, 9 & US 6400881 B1 | 1-4 |
| Y | JP 5-323248 A (Nippon Telegraph And Telephone Corp.), 07 December, 1993 (07.12.93), Column 35 (Family: none) | 1-4 |
| A | JP 2004-219589 A (Fujitsu Ltd.), 05 August, 2004 (05.08.04), (Family: none) | 1-4 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 November, 2007 (20.11.07) | 27 November, 2007 (27.11.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/067483

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2005/003847 A1  (Murata Mfg.  Co.,  Ltd.),<br>13 January, 2005 (13.01.05),<br>(Family: none) | 1-4 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11064809 A

- JP 8114776 A